# EUROPÄISCHE PATENTANMELDUNG

(11) **EP 3 473 531 A1**
(43) Veröffentlichungstag der Anmeldung: **24.04.2019**
(21) Anmeldenummer: 18201316.9
(22) Anmeldetag: 18.10.2018
(51) Int. Cl.: B62D 33/04

(54) **VORRICHTUNG ZUR LAGERUNG VON SPRIEGELBRETTERN**

(30) Priorität: 18.10.2017 DE 102017009701
(71) Anmelder: Knaack, Thomas, 29646 Bispingen (DE)
(72) Erfinder: Knaack, Tim Arne-Friedrich, 21244 Buchholz (DE)
(74) Vertreter: Hofmeister, Frank

(57) **Zusammenfassung**

Die Erfindung betrifft eine Vorrichtung (8) zur Lagerung von Spriegelbrettern (5) beim Beladen und Entladen von seitenwandlosen Fahrzeugen (1) und seitenwandlosen Fahrzeuganhängern mit Spriegel- und Planeaufbauten (2). Eine Vorrichtung zur Lagerung von Spriegelbrettern (5), die ein gefahrloses Lagern der Spriegelbretter (5) beim Be- und Entladen ermöglicht, ist erfindungsgemäß gekennzeichnet durch mindestens zwei an einem Rahmen (3) des seitenwandlosen Fahrzeugs (1) oder seitenwandlosen Fahrzeuganhängers festlegbare Schlaufen (9) zur Aufnahme der Spriegelbretter (5), wobei das Festlegen einer jeden Schlaufen (9) am Rahmen (3) über einen Aufhängemechanismus (10) erfolgt.

## Beschreibung

Die Erfindung betrifft eine Vorrichtung zur Lagerung von Spriegelbrettern beim Beladen und Entladen von seitenwandlosen Fahrzeugen und seitenwandlosen Fahrzeuganhängern mit Spriegel- und Planeaufbauten.

Seitenwandlose Fahrzeuge und seitenwandlose Fahrzeuganhänger mit Plane- und Sprieglaufbauten weisen keine festen seitlichen Bordwände auf. Statt dessen werden die Seiten durch entnehmbare senkrechte Rungen und die Rungen miteinander verbindende horizontale Spriegelbretter, die in Spriegeltaschen an den Rungen gelagert sind, sowie die darüber gespannte Plane gebildet. Die Spriegelbretter bestehen aus Holz oder Aluminium und wiegen bei einer Länge von bis zu 3 Meter 3 Kilogramm und mehr.

Um das Fahrzeug bzw. den Fahrzeuganhänger auch von der Seite beladen und entladen zu können, müssen nach den Zurückziehen der Plane die Spriegelbretter aus ihrer Lagerung in den Spriegeltaschen entfernt werden.

In der Praxis werden die entnommenen Bretter entweder unter oder neben das seitenwandlose Fahrzeuganhänger gelegt. Diese Vorgehensweise weist jedoch die Nachteile auf, dass bei der Lagerung unter dem Fahrzeug dieses nicht bewegt werden kann, ohne die Spriegelbretter zu überfahren und so zu beschädigen bzw. zu zerstören. Bei der Lagerung neben dem Fahrzeug stellen die Spriegelbretter einerseits eine Stolperfalle dar und liegen andererseits den Be- und Entladestaplern im Weg und werden von diesen häufig überfahren, wodurch die Spriegelbretter beschädigt oder zerstört werden.

Aus der DE 73 14 786 U ist eine Vorrichtung zur Lagerung von Spriegelbrettern an Fahrzeugen und Fahrzeuganhängern mit halbhohen umklappbaren Seitenwänden bekannt. Bei dieser bekannten Konstruktion sind auf der Außenseite der nach unten umgeklappten Seitenwände U-förmige Halterungen zur lagernden Aufnahme der entnommenen Spriegelbretter angeordnet. Diese bekannte Konstruktion ist aber nur bei Fahrzeugen und Fahrzeuganhängern mit zumindest teilweise vorhandenen Seitenwänden anwendbar. Für seitenwandlose Fahrzeuge und Fahrzeuganhänger ist diese bekannte Konstruktion nicht verwendbar.

Davon ausgehend liegt der Erfindung die **Aufgabe** zugrunde, eine Vorrichtung zum Lagern von Spriegelbrettern zu schaffen, die ein gefahrloses Lagern der Spriegelbretter beim Be- und Entladen ermöglicht ermöglicht.

Die **Lösung** dieser Aufgabenstellung ist erfindungsgemäß gekennzeichnet durch mindestens zwei an einem Rahmen des seitenwandlosen Fahrzeugs oder seitenwandlosen Fahrzeuganhängers festlegbare Schlaufen zur Aufnahme der Spriegelbretter, wobei das Festlegen einer jeden Schlaufen am Rahmen über einen Aufhängemechanismus erfolgt.

Durch die Verwendung der vorzugsweise paarweise zu verwendenden Schlaufen, die am Rahmen des seitenwandlosen Fahrzeugs oder seitenwandlosen Fahrzeuganhängers festlegbar sind, ist es erstmalig möglich, die vom Aufbau abgenommenen Spriegelbretter so zu lagern, dass diese einerseits nicht die Bewegung des seitenwandlosen Fahrzeugs bzw. seitenwandlosen Fahrzeuganhängers einschränken und andererseits weder den mit der Be- und/oder Entladung befassten Personen noch den Be- und Entladestaplern im Weg liegen.

Die haltende Lagerung der Spriegelbretter am Fahrzeugrahmen verhindert ein Beschädigen der Spriegelbretter und hält diese darüber hinaus in unmittelbarer Nähe des Fahrzeugs bzw. Fahrzeuganhängers zum Wiedereinsetzen in die Spriegeltaschen des Fahrzeugaufbaus bereit.

Gemäß einer bevorzugten Ausführungsform der Erfindung wird vorgeschlagen, die Schlaufen als Gurte aus einem textilen Material ausgebildet sind, wobei das textile Material vorzugsweise schnittfest ausgebildet ist. Die Ausbildung der Gurte stellt eine besonders einfache und günstige Art zur Bereitstellung der Schlaufen dar. Die Schnittfestigkeit des Schlaufenmaterials ist vorteilhaft, da insbesondere die aus Aluminium gefertigten Spriegelbretter häufig sehr scharfkantig ausgebildet sind.

Mit einer alternativen Ausführungsform zur Ausbildung der aus einem textilen Material gefertigten Schlaufen wird mit der Erfindung vorgeschlagen, dass die textilen Schlaufen mit einem Überzug aus einem schnittfesten Material überzogen sind.

Alternativ zur Ausbildung der Schlaufen als Gurte aus einem textilen Material ist es selbstverständlich auch möglich, die Schlaufen als Metallschlaufen oder als Kettenring auszubilden.

Zur Ausbildung des Aufhängemechanismus wird gemäß einer praktischen Ausführungsform der Erfindung vorgeschlagen, dass der Aufhängemechanismus mindestens einen Haken zum Verbinden mit dem Rahmen sowie ein Drehgelenk zwischen dem Haken und der Schlaufe umfasst. Die Verwendung des Drehgelenks zwischen Haken und Schlaufe stellt sicher, dass die jeweilige Schlaufe beim Einschieben des ersten Spriegelbretts einfach und schnell ausgerichtet werden kann.

Weiterhin wird mit der Erfindung vorgeschlagen, dass das Drehgelenk vorteilhafterweise als Drehwirbel ausgebildet ist. Durch die Verwendung eines Drehwirbels wird verhindert, dass Scherbelastungen auf die Aufhängung, insbesondere den am Fahrzeugrahmen festgelegten Haken, einwirken können.

Schließlich wird mit der Erfindung vorgeschlagen, dass die Länge des Schlaufenumfangs variabel einstellbar ist, um die Vorrichtung an die Aufnahme von mehr oder weniger Spriegelbrettern sowie verschiedene Rahmenhöhen der Fahrzeuge bzw. Fahrzeuganhänger anpassen zu können.

Weitere Merkmale und Vorteile der Erfindung ergeben sich anhand der zugehörigen Zeichnungen, in denen ein Ausführungsbeispiel einer erfindungsgemäßen Vorrichtung zur Lagerung von Spriegelbrettern nur beispielhaft dargestellt ist, ohne die Erfindung auf dieses Ausführungsbeispiel zu beschränken. In den Zeichnungen zeigt:
- Fig. 1: eine schematische Seitenansicht eines seitenwandlosen Fahrzeugs mit Plane- und Spriegelaufbau, an dem eine erfindungsgemäße Vorrichtung zur Lagerung von Spriegelbrettern befestigt ist,
- Fig. 2: eine vergrößerte Seitensicht einer Schlaufe einer erfindungsgemäßen Vorrichtung;
- Fig. 3: eine vergrößerte Ansicht des Details III gemäß Fig. 2 und
- Fig. 4: eine schematische Ablaufskizze zur Verwendung der erfindungsgemäßen Vorrichtung.

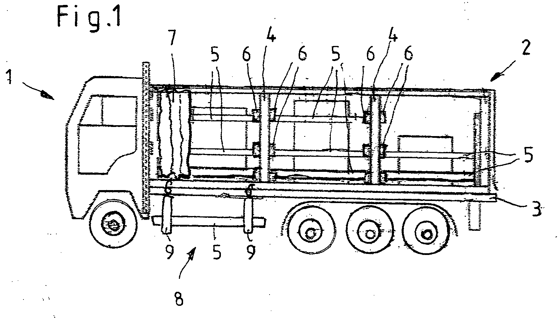

Die Abbildung Fig. 1 zeigt in der Seitenansicht ein seitenwandloses Fahrzeug 1 mit einem Plane- und Spriegelaufbau 2.

Seitenwandlose Fahrzeuge 1 und seitenwandlose Fahrzeuganhänger mit Plane- und Sprieglaufbauten 2 weisen keine festen seitlichen Bordwände auf. Statt dessen werden die Seiten durch in einem Rahmen 3 des Fahrzeugs 1 festlegbare senkrechte Rungen 4 und die Rungen 4 miteinander verbindende horizontale Spriegelbretter 5, die in Spriegeltaschen 6 an den Rungen 4 gelagert sind, sowie die darüber gespannte Plane 7 gebildet.

Seitenwandlose Fahrzeuge 1 und seitenwandlose Fahrzeuganhänger mit Plane- und Spriegelaufbau 2 können neben den klassischen LKW und LKW-Anhängern auch Kleinlaster und Eisenbahnwagen mit entsprechendem Plane- und Spriegelaufbau 2 sein.

Um das Fahrzeug 1 auch von der Seite beladen und entladen zu können, müssen nach den Zurückziehen der Plane 7 die Spriegelbretter 5 aus ihrer Lagerung in den Spriegeltaschen 6 der Rungen 4 entfernt werden.

In der Praxis werden die entnommenen Spriegelbretter 5 entweder unter oder neben das seitenwandlose Fahrzeug 1 gelegt. Diese Vorgehensweise weist jedoch die Nachteile auf, dass bei der Lagerung der Spriegelbretter 5 unter dem Fahrzeug 1 dieses nicht bewegt werden kann, ohne die Spriegelbretter 5 zu überfahren und so zu beschädigen bzw. zu zerstören. Bei der Lagerung der Spriegelbretter 5 neben dem Fahrzeug 1 stellen die Spriegelbretter 5 einerseits eine Stolperfalle dar und liegen andererseits den Be- und Entladestaplern im Weg und werden von diesen häufig überfahren, wodurch die Spriegelbretter 5 beschädigt oder zerstört werden.

Zur Vermeidung dieser voranstehend beschriebenen Nachteile beim Be- und Entladen eines Fahrzeugs 1 ist am Rahmen 3 des in Fig. 1 dargestellten seitenwandlosen Fahrzeugs 1 eine aus zwei Schlaufen 8 bestehende Vorrichtung 8 zum Lagern der Spriegelbretter 5 während des Be- und Entladevorgangs angeordnet.

Diese Vorrichtung 8 besteht aus mindestens zwei an dem Rahmen 3 des seitenwandlosen Fahrzeugs 1 festlegbaren Schlaufen 8 zur Aufnahme der Spriegelbretter 5, wobei das Festlegen einer jeden Schlaufen 8 am Rahmen 3 über einen Aufhängemechanismus 10 erfolgt.

Durch die Verwendung der vorzugsweise paarweise zu verwendenden Schlaufen 9, die am Rahmen 3 des Fahrzeugs 1 festlegbar sind, ist es möglich, die vom Aufbau abgenommenen Spriegelbretter 5 so zu lagern, dass diese einerseits nicht die Bewegung des Fahrzeugs 1 einschränken und andererseits weder den mit der Be- und/oder Entladung befassten Personen noch den Be- und Entladestaplern im Weg liegen.

Die haltende Lagerung der Spriegelbretter 5 am Rahmen 3 verhindert ein Beschädigen der Spriegelbretter 5 und hält diese darüber hinaus in unmittelbarer Nähe des Fahrzeugs 1 zum Wiedereinsetzen in die Spriegeltaschen 6 des Fahrzeugaufbaus bereit.

Die Schlaufen 9 selbst sind vorzugsweise als Gurte aus einem aus einem textilen Material ausgebildet. Um ein Beschädigen des Materials der Schlaufen 9 insbesondere bei den aus Aluminium bestehenden Spriegelbrettern 5 zu vermeiden, wird zur Ausbildung der Schlaufen 9 vorteilhafterweise ein schnittfestes Material verwendet.

Alternativ besteht die Möglichkeit, die aus einem textilen Material gefertigten Schlaufen 9 mit einem Überzug aus einem schnittfesten Material zu überziehen, um so die Schlaufen vor mechanischer Beschädigung durch die in den Schlaufen 9 gelagerten Spriegelbretter 5 zu schützen.

Selbstverständlich ist es auch möglich, die Schlaufen 9 nicht aus einem textilen Material, sondern als Metallschlaufen oder als Kettenringe auszubilden.

Der Aufbau einer Schlaufe 9 sowie des Aufhängemechanismus 10 zum Festlegen der Schlaufe 9 am Rahmen 3 des Fahrzeugs 1 ist insbesondere den Abbildungen Fig. 2 und 3 zu entnehmen.

Der Aufhängemechanismus 10 weist mindestens einen Haken 11 zum Verbinden mit dem Rahmen 3 sowie ein Drehgelenk 12 zwischen dem Haken 11 und der Schlaufe 9 auf. Die Verwendung des Drehgelenks 12 zwischen Haken 11 und Schlaufe 9 stellt sicher, dass die jeweilige Schlaufe 9 beim Einschieben des ersten Spriegelbretts 5 einfach und schnell so ausgerichtet werden kann, dass das Spriegelbrett 5 der Länge nach in die Schlaufe 9 geschoben werden kann.

Das Drehgelenk 12 ist vorteilhafterweise als Drehwirbel 13 ausgebildet. Durch die Verwendung des Drehwirbels 13 wird verhindert, dass Scherbelastungen auf die Aufhängung, insbesondere den am Rahmen 3 festgelegten Haken 11, einwirken können.

Das Festlegen der Schlaufen 9 am Rahmen 3 des Fahrzeugs 1 über die Haken 11 des Aufhängemechanismus 10 erfolgt beispielsweise in den im Rahmen 3 ausgebildeten Öffnungen, in denen sonst die Spanngurte zum Verzurren der Ladung festlegbar sind.

Wie aus Fig. 2 ersichtlich, ist im Bereich der Befestigung des Aufhängemechanismus 10 an der Schlaufe 9 auf der Innenseite der Schlaufe 9 ein in Richtung des Schlaufenumfangs verlaufender Steg 14 angeordnet. Dieser Steg 14 dient zum einen dazu zu verhindern, dass die Last im Angriffspunkt des Aufhängemechanismus 10 an der Schlaufe 9 nur punktuell auf die Schlaufe 9 wirkt und so ein Ausreißen der Schlaufe 9 bewirken könnte. Zum anderen dient der Steg 14 aber auch dazu, die Schlaufe 9 zu öffnen, wodurch das Einfügen der Spriegelbretter 5 in die Schlaufe 9 erleichtert wird.

Um die Vorrichtung 8 an die Aufnahme von mehr oder weniger Spriegelbrettern 5 sowie verschiedene Rahmenhöhen der Fahrzeuge 1 bzw. Fahrzeuganhänger anpassen zu können, ist die Länge des Schlaufenumfangs variabel einstellbar.

Die Abbildung Fig. 4 zeigt schematisch den Ablauf der Verwendung der voranstehend beschriebenen Vorrichtung 8 zur Lagerung der Spriegelbretter 5. Da die Schlaufen 9 über die Drehgelenke 12 verdrehbar am Rahmen 3 des Fahrzeugs 1 gelagert sind, empfiehlt es sich, insbesondere beim Einfügen des ersten Spriegelbretts 5 in die Schlaufen 8 der Vorrichtung 8 wie dargestellt vorzugehen.

Im ersten Schritt stellt sich die das Spriegelbrett 5 tragende Person seitlich so neben die beiden am Rahmen 3 des Fahrzeugs 1 aufgehängten Schlaufen 9 der Vorrichtung 8, dass eine Schlaufe 9 zu seiner linken Seite und die andere Schlaufe 9 zu seiner rechten Seite angeordnet ist. Jetzt wird das einzusetzende Spriegelbrett 5 in Richtung des Pfeils P1 zuerst in die linke Schlaufe 9 (oder die rechte Schlaufe 9) eingefädelt.

Anschließend im zweiten Schritt wird das Spriegelbrett 5 in Richtung des Pfeils P2 in die rechte Schlaufe 9 (oder die linke Schlaufe 9) eingefädelt.

Diese beschriebene Vorgehensweise ist insbesondere beim Einfädeln des ersten Spriegelbretts 5 in die Schlaufen 9 einfacher als das Einschieben der langen Spriegelbretter 5 von hinten oder vorne durch beide Schlaufen 9.

Eine wie voranstehend beschrieben aufgebaute Vorrichtung 8 zur Lagerung von Spriegelbrettern 5 zeichnet sich dadurch aus, dass diese ein gefahrloses Lagern der Spriegelbretter 5 beim Be- und Entladen eines Fahrzeugs 1 bzw. Fahrzeuganhängers ermöglicht und den Be- und Entladevorgang beschleunigt, da die Spriegelbretter 5 nicht hin- und hergeschoben werden müssen, um nicht im Wege zu liegen.

### Bezugszeichenliste

- 1: seitenwandloses Fahrzeug
- 2: Plane- und Spriegelaufbau
- 3: Rahmen
- 4: Runge
- 5: Spriegelbrett
- 6: Spriegeltasche
- 7: Plane
- 8: Vorrichtung
- 9: Schlaufe
- 10: Aufhängemechanismus
- 11: Haken
- 12: Drehgelenk
- 13: Drehwirbel
- 14: Steg

- P1: Pfeil
- P2: Pfeil

## Patentansprüche

1. Vorrichtung zur Lagerung von Spriegelbrettern beim Beladen und Entladen von seitenwandlosen Fahrzeugen (1) und seitenwandlosen Fahrzeuganhängern mit Spriegel- und Planeaufbauten (2),
**gekennzeichnet durch**
mindestens zwei an einem Rahmen (3) des seitenwandlosen Fahrzeugs (1) oder seitenwandlosen Fahrzeuganhängers festlegbare Schlaufen (9) zur Aufnahme der Spriegelbretter (5), wobei das Festlegen einer jeden Schlaufen (9) am Rahmen (3) über einen Aufhängemechanismus (10) erfolgt.

2. Vorrichtung nach Anspruch 1, **dadurch gekennzeichnet, dass** die Schlaufen (9) als Gurte aus einem textilen Material ausgebildet sind.

3. Vorrichtung nach Anspruch 2, **dadurch gekennzeichnet, dass** das textile Material der Schlaufen (9) schnittfest ausgebildet ist.

4. Vorrichtung nach Anspruch 2, **dadurch gekennzeichnet, dass** die textilen Schlaufen (9) mit einem Überzug aus einem schnittfesten Material überzogen sind.

5. Vorrichtung nach einem der Ansprüche 1 bis 4, **dadurch gekennzeichnet, dass** der Aufhängemechanismus (10) mindestens einen Haken (11) zum Verbinden mit dem Rahmen (3) sowie ein Drehgelenk (12) zwischen dem Haken (11) und der Schlaufe (9) umfasst.

6. Vorrichtung nach Anspruch 5, **dadurch gekennzeichnet, dass** das Drehgelenk (12) als Drehwirbel (13) ausgebildet ist.

7. Vorrichtung nach einem der Ansprüche 1 bis 6, **dadurch gekennzeichnet, dass** die Länge des Schlaufenumfangs variabel einstellbar ist.
